# EUROPÄISCHE PATENTSCHRIFT

(11) **EP 3 671 379 B1**
(45) Veröffentlichungstag und Bekanntmachung des Hinweises auf die Patenterteilung: **26.07.2023**
(21) Anmeldenummer: 19216824.3
(22) Anmeldetag: 17.12.2019
(51) Int. Cl.: G05B 19/042, G05B 19/418

(54) **AUTHENTISIERUNGS-SYSTEM UND AUTHENTISIERUNGS-VERFAHREN ZUR DURCHFÜHRUNG EINES ARBEITSPROZESSES AN EINEM OBJEKT**
AUTHENTICATION SYSTEM AND AUTHENTICATION METHOD FOR PERFORMING A WORK PROCESS ON AN OBJECT
SYSTÈME D'AUTHENTIFICATION ET PROCÉDÉ D'AUTHENTIFICATION PERMETTANT DE METTRE EN OEUVRE UN PROCESSUS DE TRAVAIL SUR UN OBJET

(30) Priorität: 19.12.2018 DE 102018132993
(43) Veröffentlichungstag der Anmeldung: 24.06.2020
(73) Patentinhaber: Francotyp-Postalia GmbH, 13089 Berlin (DE)
(72) Erfinder: HEINRICH, Clemens, 16515 Oranienburg (DE); ROSENAU, Dirk, 13469 Berlin (DE); GÜNTHER, Stephan, 16548 Glienicke (DE); HÜBLER, Uwe, 15366 Neuenhagen (DE)
(74) Vertreter: Hertin und Partner Rechts- und Patentanwälte PartG mbB

(56) Entgegenhaltungen:
- EP-A1- 2 237 123
- WO-A1-2016/065493
- WO-A2-2006/013021

## Beschreibung

Die Erfindung betrifft ein System und ein Verfahren zur Durchführung eines Arbeitsprozesses an einem Objekt, wobei das System mindestens eine Arbeitsstation, eine Erfassungseinrichtung, eine Steuereinrichtung und eine Auditoreinrichtung umfasst. Das System und das Verfahren können zum Authentisieren von Prozess-Schritten oder System-Konfigurationen verwendet werden.

### Stand der Technik:

Es besteht ein technischer Bedarf, technische Geräte, die beispielsweise miteinander ein Netz oder ein System bilden, regelmäßig hinsichtlich ihrer Konfiguration zu überwachen beziehungsweise zu prüfen, ob innerhalb der Geräte richtige Gerätekomponenten verwendet werden beziehungsweise ob die Gerätekomponenten in einem einsatzbereiten Zustand sind. Eine solche Zustandsüberprüfung sollte durch die vorliegende Erfindung vorzugsweise nicht nur für physische Komponenten innerhalb der Geräte ermöglicht werden, sondern beispielsweise auch für Softwareapplikationen oder hinterlegte Daten, wie gespeicherte Kontostände oder Guthabenbeträge innerhalb eines technischen Geräts. Beispielsweise entsteht in der Wirtschaft jährlich ein hoher Schaden durch fehlerhafte Malware, die Schäden an Rechnern oder IT-Infrastruktur erzeugt. Wünschenswert wäre es, wenn eine solche Überwachung an einem zentralen Ort des Netzes oder des Systems vorgenommen werden könnte. Dies kann beispielsweise dann besonders hilfreich sein, wenn die einzelnen technischen Geräte weit entfernt voneinander oder von dem zentralen Ort aufgestellt sind, wie es in einer globalen Wirtschaft durchaus vorkommen kann. Es besteht ferner ein technisches Bedürfnis, die Echtheit eines Gerätebestandteils oder einer Systemkomponente zu überprüfen, insbesondere ohne, dass ein entsprechend geschulter Servicetechniker vor Ort das Gerät untersuchen muss.

WO2006/013021 offenbart ein Verfahren und eine Vorrichtung zur Funktionsüberprüfung eines Feldgerätes vor dessen Inbetriebnahme. WO2016/065493 offenbart eine Konfigurationsüberprüfung von Sensoren. EP2237123 offenbart ein Verfahren, eine Vorrichtung und ein Computerprogramm zur dezentralen Kompatibilitätsprüfung zwischen Komponenten in einem Automatisierungssystem.

Es ist daher Aufgabe der vorliegenden Erfindung, ein System und ein Verfahren zur Durchführung eines Arbeitsprozesses an einem Objekt beziehungsweise zur Überwachung einer solchen Prozessdurchführung bereitzustellen. Dabei soll vorzugsweise nicht einfach nur eine Überwachung der technischen Geräte von außen ermöglicht werden, sondern eine besonders sichere Überwachung von Vorgängen innerhalb eines Systems oder eines Geräts bereitgestellt werden. Es wäre insbesondere wünschenswert, wenn Informationen, die innerhalb eines Systems oder eines Geräts übertragen werden, oder Transaktionen oder Prozess-Schritte abgesichert werden könnten.

Gelöst wird die Aufgabe durch die Merkmale der unabhängigen Ansprüche. Vorteilhafte Ausgestaltungen der Erfindung sind in den abhängigen Ansprüchen beschrieben. Erfindungsgemäß ist ein System zur Durchführung eines Arbeitsprozesses an einem Objekt gemäß Anspruch 1 vorgesehen.

Eine wesentliche Idee, die der Erfindung zugrunde liegt, besteht darin, dass eine Auditoreinrichtung überwacht, wenn eine Systemsteuerung die einzelnen Komponenten des Systems abfragt, beispielsweise im Hinblick darauf, ob eine Systemkomponente vorhanden und/oder einsatzbereit ist oder ob eine "richtige" Systemkomponente installiert ist, die insbesondere geeignet ist, die gewünschte Funktion bei der Durchführung eines Arbeitsprozesses zu übernehmen. Die Auditoreinrichtung kann im Sinne der Erfindung bevorzugt auch als Auditor bezeichnet werden, wobei die Bezeichnungen synonym verwendet werden. Die Überwachung des Auditors kann im Sinne der Erfindung auch als "Mithören" oder "Mitschreiben" der Abfrage durch die Systemsteuerung betrachtet werden, wobei die Funktion der Systemsteuerung insbesondere von einer Steuereinrichtung innerhalb des vorgeschlagenen Systems übernommen wird. Diese wird im Sinne der Erfindung vorzugsweise auch als Steuerungseinrichtung bezeichnet.

Es ist im Sinne der Erfindung ganz besonders bevorzugt, dass die Auditoreinrichtung von einer Sicherheitseinrichtung einer Systemkomponente durchgeführt wird. Vorzugsweise kann die Auditoreinrichtung beziehungsweise die Sicherheitseinrichtung ein Bestandteil der Arbeitsstation sein, mit der ein Arbeitsverfahren oder ein Arbeitsprozess an einem Objekt durchgeführt wird. Die Sicherheitseinrichtung umfasst vorzugsweise ein Hardware Security Module (HSM) oder wird von einem solchen gebildet. Das HSM kann vorzugsweise auch Bestandteilt der Arbeitsstation oder einer anderen Komponente des vorgeschlagenen Systems sein. Es ist im Sinne der Erfindung insbesondere bevorzugt, dass die Auditoreinrichtung eine Sicherheitseinrichtung der Arbeitsstation ist.

Es ist im Sinne der Erfindung bevorzugt, dass das HSM ein hardwarebasiertes, kryptografisches Modul darstellt, das vorzugsweise eine FIPS-140-2-Zertifizierung aufweist. Es ist im Sinne der Erfindung bevorzugt, dass die Formulierung, dass eine Vorrichtung sicher arbeitet, technisch bedeutet, dass die entsprechende Vorrichtung eine solchen FIPS-Zertifizierung aufweist. Durch die Vorsehung der mit FIPS-Zertifizierung arbeitenden Auditoreinrichtung wird insbesondere ein technisches Problem mit technischen Mitteln gelöst, nämlich die Bereitstellung einer besonders sicheren Datenübertragung innerhalb eines Authorisierungssystems und - verfahrens.

Das HSM kann von einem Einzelchipmodul, einem autonomen Multichipmodul oder einem eingebetteten Multichipmodul gebildet werden oder ein solches umfassen. Das HSM ist vorzugsweise dazu eingerichtet, Daten besonders sicher zu speichern. Insbesondere ist ein HSM dazu in der Lage, kritische Sicherheitsparameter, wie Passwörter, vertrauliche Daten oder Schlüssel zur Verschlüsselung von Daten, zu generieren, zu speichern, zu nutzen und/oder zu pflegen. Die Schlüssel können beispielsweise symmetrisch oder asymmetrisch sein. Vorteilhafterweise können HSM als kryptografische Coprozessoren eingesetzt werden. In bevorzugten Ausführungsformen kann ein HSM eine batteriebetriebene Schaltung und/oder eine Spannungsüberwachung aufweisen. Dadurch wird insbesondere die Integration oder Vorsehung einer Echtzeituhr zur korrekten Zeiterfassung und Zeitstempelung ermöglicht, wodurch beispielsweise gewährleistet werden kann, dass abgelaufene Schlüssel nicht länger genutzt werden können. Darüber hinaus kann ein HSM einen redundanten Speicher umfassen, der beispielsweise dafür genutzt werden kann, mehrere Technologien zu Erzeugung einer zusätzlichen Datensicherheit gleichzeitig zu verwenden.

Es ist im Sinne der Erfindung, dass ein HSM eine Kette von Zertifikaten umfasst, die vorzugsweise vor Inbetriebnahme des HSM auf die Vorrichtung geladen werden. Das HSM ist darüber hinaus dazu eingerichtet, eigene private und öffentliche Geräteschlüssel zu erzeugen. Vorzugsweise verlässt der private Schlüssel zu keinem Zeitpunkt das HSM, während der öffentliche Schlüssel nach außen abgegeben werden kann, zum Beispiel an einen externen Server zur dortigen Signierung. Im Gegenzug kann das HSM ein personalisiertes, signiertes Gerätezertifikat erhalten, mit dem das HSM die Sicherheit in einem Internet of Things-System (loT) deutlich erhöhen kann. Das HSM kann dann vom externen Server als "echte" Sicherheitseinrichtung erkannt und authentifiziert werden, was insbesondere durch die Vergabe einer eindeutigen Kennung ermöglicht wird. Auf diese Weise lassen sich besonders unkompliziert authentifiziertes TLS-Verbindungen herstellen (Transport Layer Security). Es wird bevorzugt, eine Public-Key Infrastruktur zu verwenden.

Es ist im Sinne der Erfindung bevorzugt, dass der Auditoreinrichtung und den anderen Komponenten des Systems, insbesondere der Arbeitsstation, der Erfassungseinrichtung und der Steuereinrichtung, eine ID beziehungsweise ein ID-Wert zugeordnet wird. Die entsprechenden IDs oder ID-Werte können in jeder Systemkomponente einzeln gespeichert sein. Es kann aber auch bevorzugt sein, dass die IDs oder ID-Werte der Systemkomponenten zentral an einer Stelle des Systems, beispielsweise in der Steuereinrichtung, hinterlegt sind. Die Abfrage des System, die von der Steuereinrichtung durchgeführt wird, besteht dann beispielsweise darin, dass die Steuereinrichtung überprüft, ob eine Systemkomponente vorhanden und einsatzbereit ist oder ob eine "richtige" Systemkomponente installiert ist, die die gewünschte Funktion bei der Durchführung eines Arbeitsprozesses übernehmen kann, ohne zu fehlerhaften Ergebnissen oder Beschädigungen zu führen. Insbesondere wird bei der Überprüfung beziehungsweise dem "Mithören" der Auditor von der Steuereinrichtung gefragt, ob die ermittelte, d.h. festgestellte Systemkonfiguration den Vorgaben entspricht.

Dies erfolgt vorzugsweise über einen Abgleich der festgestellten IDs oder ID-Werte des Systemkomponenten mit solchen IDs oder ID-Werten, die im System hinterlegt sind, zum Beispiel in der Steuereinrichtung. Es kann im Sinne der Erfindung bevorzugt sein, dass für jede Systemkomponente genau eine "richtige" ID im System hinterlegt ist. Es kann aber auch bevorzugt sein, dass für eine Systemkomponente mehrere unterschiedliche Typen der Komponente verwendet oder eingesetzt werden können. In diesem Fall können im System mehrere unterschiedliche mögliche IDs oder ID-Werte für diese Systemkomponente hinterlegt sein.

Es kann im Sinne der Erfindung bevorzugt sein, dass die IDs oder ID-Werte zusammengesetzt sind aus verschiedenen Unter-IDs oder Unter-ID-Werten. Dies kann insbesondere der Fall sein, wenn die Systemkomponente selbst aus verschiedenen technischen Bauteilen besteht, wie zum Beispiel eine Frankiermaschine, die beispielsweise eine Arbeitsstation im Sinne der Erfindung bilden kann.

Es kann im Sinne der Erfindung aber auch bevorzugt sein, dass jedem Bauteil der Arbeitsstation eine eigene ID oder ein eigener ID-Wert zugeordnet wird und bei der Abfrage der Systemkomponenten die Bauteile der einen Systemkomponente wie eigene Systemkomponenten berücksichtigt beziehungsweise behandelt werden. Der hier beschriebene Verfahrensschritt des vorgeschlagenen Auditierungsverfahrens wird vorzugsweise als Abfrage einer Konfigurationsinformation einer Erfassungseinrichtung durch eine Steuereinrichtung zu einem Zeitpunkt vor einem Start des Arbeitsprozesses bezeichnet, wobei die Erfassungseinrichtung der Arbeitsstation zugeordnet ist und dazu eingerichtet ist, mindestens eine Erfassungsinformation und/oder ein Zustandsparameter der Arbeitsstation und/oder des Objekts zu erfassen.

Es ist im Sinne der Erfindung insbesondere bevorzugt, dass die Konfigurationsinformation eine ID und/oder eine Erfassungsinformation und/oder eine Zustandsinformation der Erfassungseinrichtung ist. Zustandsinformation und Zustandsparameter sind bevorzugt synonym verwendete Begriffe. Der Begriff "Erfassungsinformation und/oder die Zustandsinformation der Erfassungseinrichtung" ist im Sinne der Erfindung so zu verstehen, dass damit sowohl ein Betriebsparameter gemeint ist, der von der Erfassungseinrichtung ermittelt wird, wobei mit dem Begriff "Betriebsparameter" insbesondere der Zustand einer Systemkomponente, zum Beispiel einer Arbeitsstation beschrieben wird, als auch ein Zustandsparameter gemeint ist, der von der Erfassungseinrichtung ermittelt wird, wobei mit dem Begriff "Zustandsparameter" insbesondere von außen auf das System einwirkende Zustände wie beispielsweise ein Zustand des Objekts, dessen Zustand durch das Arbeitsverfahren verändert werden soll, beschrieben wird. Daher wird bevorzugt der Begriff Erfassungsinformation verwendet, welcher sowohl Betriebsparameter als auch Zustandsparameter umfasst.

Wenn der Auditor feststellt, dass die ID jeder Systemkomponente oder jedes Bauteils des Systems mit einer hinterlegten ID übereinstimmt, so gibt der Auditor sein Einverständnis zur Durchführung des Arbeitsprozesses und der Arbeitsprozess kann gestartet werden. Dieses Einverständnis beruht auf einer Verarbeitung der Auditierungsinformation durch die Steuereinrichtung, die vorzugsweise dazu führt, dass der Arbeitsprozess in Abhängigkeit von der Auditierungsinformation, d.h. bei Übereinstimmung der ermittelten und der hinterlegten IDs, gestartet wird.

Wenn die IDs einer Systemkomponente oder eines Bauteils des Systems nicht mit einer hinterlegten ID übereinstimmen, so wird der Arbeitsprozess nicht gestartet. Stattdessen kann beispielsweise ein Signal erzeugt, versendet und/oder abgegeben werden, beispielsweise in Form einer SMS-Nachricht, die an einen Operator der Arbeitsstation beziehungsweise an sein mobiles Kommunikationsgerät geschickt wird, oder durch eine E-Mail-Benachrichtigung, die an eine hinterlegte E-Mail-Adresse versendet wird, oder durch ein akustisches Signale oder durch eine Fehlermeldung, die auf einer Anzeigenvorrichtung oder einem Dashboard angezeigt wird. Der Operator wird dadurch vorteilhafterweise in die Lage versetzt, die Systemkomponenten so zu verändern, dass eine erneute Abfrage der Systemkomponenten durch die Systemsteuerung, bei der der Auditor "mithört", zu einem positiven Ergebnis und zu einem Start des Arbeitsprozesses führt. Dies kann beispielsweise dadurch erreicht werden, dass eine als "falsch" oder "nicht-einsatzbereit" identifizierte Systemkomponente ausgetauscht wird oder in einen einsatzbereiten Zustand überführt wird.

Es ist im Sinne der Erfindung bevorzugt, dass das Einverständnis des Auditors zum Start des Arbeitsprozesses signiert erfolgt, d.h. dass die entsprechende Freigabe signiert wird. Dies bedeutet im Sinne der Erfindung bevorzugt, dass der Freigabe eine vorzugsweise digitale Signatur zuordnet wird. Dabei wird der Freigabe des Auditors ein Signaturschlüssel zugeordnet, der vorzugsweise vom Auditor berechnet wird und der erforderlich ist, damit der Empfänger der Freigabenachricht, hier vorzugsweise die Steuereinrichtung, die Freigabe empfangen, entschlüsseln und umsetzen kann. Es ist in diesem Zusammenhang bevorzugt, dass die Auditoreinrichtung die Auditierungsinformation an die Steuereinrichtung versendet und dass die Auditierungsinformation durch die Steuereinrichtung verarbeitet wird.

Es ist im Sinne der Erfindung insbesondere bevorzugt, dass die Auditoreinrichtung dazu eingerichtet ist, die Auditierungsinformation mit kryptografischen Mitteln abzusichern, bspw. durch Verwendung einer Public-Key-Infrastruktur. Dies kann beispielsweise durch eine vorzugsweise digitale Signierung der Auditierungsinformation erfolgen. Vorzugsweise verfügt die Auditoreinrichtung über kryptografische Fähigkeiten, die bei der Erzeugung der digitalen Signatur verwendet werden, um eine Verschlüsselung der übermittelten Informationen zu erreichen oder zu verbessern. Vorzugsweise umfasst die Auditoreinrichtung dazu kryptografische Mittel, beispielsweise einen Prozessor mit hoher Rechenleistung, mit deren Hilfe Informationen, Nachrichten und/oder Transaktionen im vorgeschlagenen System verschlüsselt übermittelt und/oder signiert werden können.

Es ist im Sinne der Erfindung bevorzugt, dass die Erfassungseinrichtung mindestens einen Sensor oder eine Sensorsystem umfasst. Die Sensoren der Erfassungseinrichtung sind vorzugsweise dazu eingerichtet, die Konfigurationsinformationen zu erheben, die später an die Auditoreinrichtung weitergeleitet werden. Die Konfigurationsinformation umfasst vorzugsweise Betriebs- und/oder Zustandsparameter des Systems oder einer Arbeitsstation, die mit der entsprechenden Erfassungseinrichtung zusammenwirken. Es ist im Sinne der Erfindung bevorzugt, dass die Zustandsparameter die Parameter beschreiben, die von außen auf das System oder die Arbeitsstation einwirken. Dabei kann es sich zum Beispiel um eine Temperatur in einem Raum handeln, in dem die Arbeitsstation aufgestellt ist. Es kann sich zum Beispiel auch um eine Luftfeuchte, einen Umgebungsdruck, eine Tageszeit, eine Helligkeit usw. handeln, ohne darauf beschränkt zu sein.

Es kann im Sinne der Erfindung bevorzugt sein, dass die Erfassungseinrichtung insbesondere als Sicherheitseinrichtung fungiert und dass das vorgeschlagene System vorzugsweise mehrere Sicherheitseinrichtungen umfasst, die miteinander beziehungsweise untereinander kommunizieren können. Es ist ganz besonders bevorzugt, dass die Sicherheitseinrichtungen der Arbeitsstationen miteinander ein Kommunikationsnetzwerk bilden, in dem Informationen ausgetauscht werden können. Es ist ganz besonders bevorzugt, dass der Informationsaustausch und die Kommunikation in dem Kommunikationsnetzwerk, das vorzugsweise Bestandteil des vorgeschlagenen Systems ist, sicher erfolgt, d.h. den Anforderungen an eine Sicherheit gemäß dem FIPS-Standard genügt. Es ist im Sinne der Erfindung ganz besonders bevorzugt, dass die Systemkomponenten so miteinander kommunizieren, dass eine Komponente des vorgeschlagenen Systems, zum Beispiel die Erfassungseinrichtung, eine Systemkonfiguration feststellt, wobei dieselbe oder eine andere Systemkomponenten aufgrund dieser Konfigurationsinformation ableiten kann, welche Handlungen aufgrund der festgestellten Konfiguration mit dem vorgeschlagenen System möglich sind. Dies soll an nachfolgendem Anwendungsbeispiel beschrieben werden:
Beispielsweise kann das vorgeschlagene System Bestandteil eines Herstellungssystems für Sicherheitsdokumente sein. Sicherheitsdokumente können beispielsweise Personalausweise, Reisepässe oder Führerscheine sein. Bei einem Prozess zur Herstellung eines solchen Sicherheitsdokuments können verschiedene Arbeitsstationen vorgesehen sein, die im Rahmen des Herstellungsprozesses unterschiedliche Aufgaben übernehmen. Insbesondere können verschiedene Arbeitsstationen vorgesehen sein, die unterschiedlich ausgeprägte Sicherheitsmerkmale in das herzustellende Sicherheitsdokument einbringen.

Es können beispielsweise Laserquellen, Druckeinheiten, Stanzeinheiten und/oder Perforationseinheiten vorgesehen sein, die beispielsweise dazu in der Lage sind, Sicherheitsmerkmale in das Sicherheitsdokument einzulasern, aufzudrucken, einzustanzen oder eine Perforation anzubringen. Es kann darüber hinaus eine Arbeitsstation vorgesehen sein, in die ein Nutzer Rohlinge, aus denen später die Sicherheitsdokumente gefertigt werden sollen, einlegen kann. Dabei kann es sich beispielsweise um papier-, papp- oder kunststoffbasierte Substrate handeln, die als Rohlinge weder individualisiert, noch serialisiert vorliegen. Es kann bevorzugt sein, dass beispielsweise für die Ausweisdokumente unterschiedlicher Länder unterschiedliche Rohlingstypen vorgesehen sind, die in die Einlegestation eingelegt und mit dem Herstellungssystem zu fertigen Ausweisdokumenten verarbeitet werden können. Vorzugsweise umfassen die verschiedenen Arbeitsstationen, wie zum Beispiel die Laserquelle, Druckeinheit, Stanzeinheit, Perforationseinheit und/oder Einlegestation, Erfassungsvorrichtungen, die den Zustand der jeweiligen Arbeitsstation ermitteln können.

Erfindungsgemäß ist vorgesehen, dass die innerhalb des vorgeschlagenen Systems ermittelten Parameter, die die aktuellen Zustände innerhalb des Systems beziehungsweise die aktuellen Zustände der Arbeitsstationen beschreiben, als Betriebsparameter bezeichnet werden. Ein Betriebsparameter kann beispielsweise sein, welche Art von Rohlingen in die Einlegestation eingelegt sind (dicke oder dünne Rohlinge, Papier oder Kunststoff, ausreichende Menge oder fast aufgebraucht). Bei einer Druckeinheit kann durch die entsprechende Erfassungseinrichtung beispielsweise festgestellt werden, ob im Drucker ausreichend Farbe oder Tinte vorhanden ist und ob der Drucker aufgewärmt und einsatzbereit oder kalt und nicht einsatzbereit ist. Eine Arbeitsstation kann beispielsweise auch eine Datenverarbeitungsanlage mit einem Speichermedium und/oder mit einer Datenbank sein, wobei die relevanten Informationen, die zur Herstellung des gewünschten Sicherheitsdokuments erforderlich sind (zum Beispiel: "italienischer Reisepass auf einem Rohling des Typs A aus Papier mit den Sicherheitsmerkmalen A, B und C"), in dieser Datenverarbeitungsanlage, dem Speichermedium und/oder der Datenbank hinterlegt sein können.

Es ist im Sinne der Erfindung bevorzugt, dass das vorgeschlagene System erkennt, welche Arbeitsstationen gerade einsatzbereit sind und in der Lage sind, die ihnen zugeordneten Funktionen auszuführen. Wenn beispielsweise 100 italienische Reisepässe mit den oben genannten Eigenschaften hergestellt werden sollen, kann das vorgeschlagene System prüfen, ob die entsprechenden Informationen im System hinterlegt sind und ob die entsprechenden Voraussetzungen für die Herstellung erfüllt sind. Das wäre im obigen Beispiel insbesondere der Fall, wenn im System mindestens 100 Rohlinge des Typs A aus Papier vorhanden wären, sowie in den entsprechenden Arbeitsstationen die entsprechenden Verbrauchsmaterialien, um die Sicherheitsmerkmale A, B und C auf die Reisepässe aufzubringen. Darüber hinaus müssten alle erforderlichen Arbeitsstationen dem System, insbesondere der Auditoreinrichtung, gemeldet haben, dass sie einsatzbereit sind. Wenn all diese Voraussetzungen erfüllt sind, kann die Herstellung der 100 italienischen Reisepässe erfolgen. Dies kann vorzugsweise dadurch erfolgen, dass die Auditoreinrichtung auf Grundlage der von den Erfassungseinrichtungen übermittelten Informationen den Ist-Zustand des Systems beziehungsweise der Arbeitsstationen feststellt und diese mit den vorzugsweise im System hinterlegten Anforderungen für die Herstellung italienischer Reisepässe abgleicht. Wenn alle Bedingungen erfüllt sind, kann die Auditoreinrichtung mit Hilfe einer Steuereinrichtung veranlassen, dass die 100 Stück italienische Reisepässe produziert werden. Bei den von den Erfassungseinrichtungen übermittelten Informationen bezüglich des Ist-Zustands des Systems handelt es sich vorzugsweise um die Betriebsparameter der Arbeitsstationen beziehungsweise die Zustandsparameter des Objekts, das mit dem Arbeitsprozess verarbeitet oder hergestellt werden soll, hier dem italienischen Reisepass, oder um die Konfigurationsinformationen, die von den Erfassungseinrichtungen an die Auditoreinrichtung des vorgeschlagenen Systems übermittelt wird.

Es ist mit anderen Worten im Sinne der Erfindung bevorzugt, dass sich die Komponenten des vorgeschlagenen Systems selbst gegenseitig überprüfen können und dass die Auditoreinrichtung in Verbindung mit der Steuereinrichtung des Systems festlegen kann, welche Prozesse gerade durchführbar sind und welche nicht. Die gegenseitige Überprüfung kann beispielsweise darin bestehen, dass eine Arbeitsstation dahingehend überprüft wird, ob sie einsatzbereit oder ob sie genug Verbrauchsmaterial zur Verfügung hat, um einen bestimmten Prozess-Schritt durchführen zu können.

Es kann auch überprüft werden, ob die entsprechende Arbeitsstation "die richtige Arbeitsstation" in dem Sinne ist, ob sie die erforderliche Authentisierung für die Durchführung des gewünschten Prozess-Schrittes aufweist. Beispielsweise können in dem System zur Herstellung von Sicherheitsdokumenten Arbeitsstationen vorgesehen sein, die im Wesentlichen in der Lage sind, denselben Prozess-Schritt durchzuführen, allerdings auf unterschiedlichen Sicherheitsniveaus, die beispielsweise durch unterschiedliche Sicherheitszertifizierungen zum Ausdruck kommen können. Wenn beispielsweise ein Sicherheitsdokument hergestellt werden soll, für das nur eine Verarbeitung mit einer Arbeitsstation mit einem sehr hohen Sicherheitsniveau in Frage kommt, kann das vorgeschlagene System, insbesondere durch die Auditoreinrichtung und die ihr zur Verfügung stehenden Daten, die eine Arbeitsstation, die eine höhere Sicherheitszertifizierung aufweist, für die Durchführung des Prozess-Schrittes zulassen und die andere Arbeitsstation mit einem zu geringen Sicherheitsniveau von der Durchführung des Prozess-Schrittes ausschließen. Wenn es um die Produktion von Waren oder Produkten geht, ermöglicht das vorgeschlagene System vorzugsweise, dass das System seinen eigenen Betrieb selbsttätig steuert, und zwar in Abhängigkeit von sowohl den von außen auf das System einwirkenden Zustandsparametern, als auch in Abhängigkeit von den innerhalb des Systems vorliegenden Betriebsparametern. Der besondere Vorteil des vorgeschlagenen Systems besteht insbesondere darin, dass die entsprechenden Daten zwischen den Systemkomponenten "sicher" im Sinne der Erfindung ausgetauscht werden, nämlich beispielsweise unter Verwendung von FIPS-zertifizierten Sicherheitseinrichtungen oder Systemkomponenten oder Arbeitsstationen. Dadurch wird insbesondere bei sicherheitsrelevanten Anwendungen, wie der Herstellung von Sicherheitsdokumenten, sichergestellt, dass die übertragenen Daten nicht von außen manipuliert werden können. Die sichere, d.h. FIPS-zertifizierte Übertragung von Daten innerhalb des Systems, stellt einen besonderen Vorteil der vorliegenden Erfindung dar.

Es ist im Sinne der Erfindung insbesondere bevorzugt, dass das Zusammenwirken der Systemkomponenten im Kontext der vorgeschlagenen Erfindung intelligent, d.h. smart, erfolgt. Die Begriffe "intelligent" und "smart" werden im Sinne der Erfindung synonym benutzt und werden im Sinne der Erfindung vorzugsweise wie folgt verstanden:
Bei herkömmlichen Steuersystemen, die aus dem Stand der Technik bekannt sind, erfolgt eine Steuerung oder Regelung des Systems häufig mit Hilfe von festen Grenz- oder Schwellwerten. Beispielsweise kann vorgesehen sein, dass in einem Gebäudelüftungssystem eine Klimaanlage bei Temperaturen von über 20 °C zu arbeiten beginnt. In einem anderen Beispiel kann beispielsweise eine Anzeigenvorrichtung in einem Motor beziehungsweise seinem Ölsystem anzeigen, dass ein Rußfilter ausgetauscht werden muss, weil ein bestimmter Verunreinigungsgrad des Öls oder des Filters überschritten wird. In einem System, das im Sinne der Erfindung als "intelligent" oder "smart" bezeichnet wird, wird die Steuerung eines Systems nicht oder nicht nur von festen oder vorgegeben Grenz- oder Schwellwerten bestimmt, sondern die entsprechende Auditoreinrichtung des vorgeschlagenen smarten Systems ist vorzugsweise in der Lage, Wechselwirkungen zwischen den vorzugsweise von außen auf das System einwirkenden Zustandsparametern und den innerhalb des Systems herrschenden Betriebsparametern bei der Steuerung des Systems beziehungsweise seiner Arbeitsstationen zu berücksichtigen. Wenn beispielsweise die Erfassungseinrichtungen des Systems feststellen, dass in der Umgebung der Arbeitsstation eine niedrige Temperatur herrscht, ist die Auditoreinrichtung erfindungsgemäß dazu eingerichtet, zu erkennen, dass die niedrige Umgebungstemperatur Auswirkungen auf die Viskosität des Motoröls hat, so dass andere Grenzwerte für den Verunreinigungsgrad des Motoröls gelten können als bei hohen Temperaturen, bei denen das Motoröl üblicherweise dünnflüssiger ist.

Wenn das vorgeschlagene System in einem Gebäude-Lüftungs- und Klimasystem eingesetzt wird, können beispielsweise Zusammenhänge zwischen Temperatur, Sonneneinstrahlung, Luftdruck und/oder Luftfeuchte als Zustandsparameter auf der einen Seite und Verschmutzungsgrad einer Filtereinrichtung oder Flüssigkeitsmenge in einer Raumbefeuchtungseinrichtung als Betriebsparameter auf der anderen Seite zueinander in Relation gesetzt werden. Dadurch wird es erfindungsgemäß möglich, dass das vorgeschlagene System in der Lage ist, das System, mit dem es zusammenwirkt, in Abhängigkeit von äußerlichen Zustandsparametern zu steuern, wobei die äußeren Zustandsparametern vorzugsweise mit den Betriebsparametern des Systems beziehungsweise der Arbeitsstationen - ähnlich wie kommunizierende Röhren - in Wechselwirkung stehen.

Mögliche Relationen und Abhängigkeiten zwischen den vorzugsweise systeminternen Betriebsparametern und den Zustandsparametern können beispielsweise in der Auditoreinrichtung des Systems beziehungsweise in einem Speichermedium innerhalb des Systems und/oder eine Datenbank abgelegt sein, wobei die Datenbank beispielsweise lokal Bestandteil des Systems sein kann oder wobei ein Remotezugriff auf eine externe Datenbank möglich sein kann. Es ist im Sinne der Erfindung bevorzugt, dass ein System, bei dem Wechselwirkungen oder Relationen zwischen Betriebs- und Zustandsparametern bei der Steuerung des Systems berücksichtigt werden können, als intelligent oder smart bezeichnet wird.

Es ist im Sinne der Erfindung bevorzugt, dass das vorgeschlagene Authentisierungssystem beziehungsweise das vorgeschlagene Authentisierungsverfahren zusammenwirken kann mit anderen loT-Systemen oder loT-Verfahren, wie zum Beispiel Bezahl- und/oder Protokollierungssystemen oder -verfahren. Dadurch werden die vielfältigen Einsatzmöglichkeiten der Erfindung vorteilhafterweise weiter vergrößert.

Es ist im Sinne der Erfindung vorgesehen, dass das vorgeschlagene System dazu eingerichtet ist, einen Arbeitsprozess an einem Objekt durchzuführen, wobei der Arbeitsprozess mindestens einen Prozess-Schritt umfasst und wobei durch den Arbeitsprozess mindestens ein Zustand des Objekts zumindest teilweise verändert wird. Bei dem Objekt kann es sich vorzugsweise um ein physisches oder ein nichtphysisches Objekt handeln. Vorzugsweise wird für die Durchführung des Arbeitsprozesses eine Arbeitsstation verwendet, bei der es sich beispielsweise um eine Frankiermaschine handeln kann. In diesem Fall kann das Objekt beispielsweise ein physisches Objekt sein, zum Beispiel ein Briefumschlag, der mit einem Frankiercode bedruckt wird. Das Aufdrucken des Frankiercodes stellt im Sinne der Erfindung eine Änderung des Zustands des Objekts dar, denn der Briefumschlag wird durch das Aufdrucken von einem ersten Zustand in einen zweiten Zustand überführt. In dem ersten Zustand liegt der Briefumschlag vorzugsweise unbedruckt und dadurch unfrankiert vor, während der Briefumschlag im zweiten Zustand bedruckt und dadurch frankiert vorliegt.

Das Objekt kann beispielsweise auch ein Zahlenwert oder ein Parametersatz sein, der den Zustand eines Objekts oder eines Verfahrens beschreibt. Eine Veränderung dieses Zahlenwerts oder dieses Parametersatzes kann dann eine Änderung eines Objektszustands im Sinne der Erfindung sein. Wenn sich ein Zahlenwert oder jeder einzelne Parameter in einem Parametersatz ändert, wird im Sinne der Erfindung vorzugsweise von einer vollständigen Änderung des Objektszustands gesprochen. Wenn sich nur ein Parameter oder eine Teilmenge der Parameter des Parametersatzes ändert, so ist vorzugsweise von einer teilweisen Änderung des Objektszustands die Rede.

Es ist im Kontext der vorliegenden Erfindung vorgesehen, dass durch den Arbeitsprozess mindestens ein Zustand des Objekts zumindest zeitweise verändert wird. Dies bedeutet im Sinne der Erfindung bevorzugt, dass eine Änderung des Zustands eines Objekts zumindest für einen gewissen Zeitraum, d.h. für eine Zeitspanne mit einer gewissen Zeitdauer anhält, wobei die Zustandsänderung dauerhaft sein kann oder wobei die Zustandsänderung nach Ablauf einer gewissen Zeit beendet werden kann. Im letzten Fall wird vorzugsweise von einer vorübergehenden Zustandsänderung gesprochen. In diesem Fall kann das Objekt beispielsweise in seinen Ausgangszustand zurückkehren, der im Sinne der Erfindung als erster Zustand bezeichnet wird. Es kann aber auch bevorzugt sein, dass das Objekt in einen dritten Zustand überführt wird, der sich von dem Ausgangs- und dem Zwischenzustand, der vorzugsweise als zweiter Zustand bezeichnet wird, unterscheidet.

Mit dem vorgeschlagenen System und dem vorgeschlagenen Verfahren können vorteilhafterweise Zustände von Systemkomponenten, wie Arbeitsstationen, oder Objekten, überwacht werden. Dies insbesondere auf einem besonders hohen Sicherheitsniveau, das vorzugsweise durch die Vorsehung der Auditierungseinrichtung gewährleistet wird, die beispielsweise als Hardware Security Module (HSM) ausgebildet sein kann. Die Bereitstellung der Überwachungsmöglichkeit von Komponenten- oder Objektszuständen ist besonders deshalb vorteilhaft, weil in der Wirtschaft und in der Industrie eine Veränderung von Geschäftsmodellen zu beobachten ist. Beispielsweise wird bei der Vermietung von Druckluftkompressoren nicht mehr die Standzeit oder die Betriebsdauer des Kompressors als Rechengröße zur Ermittlung einer Leihgebühr verwendet, sondern häufig die Menge der tatsächlich durch den Kompressor abgegebenen Druckluft. Die Menge dieser Druckluft kann mit dem vorgeschlagenen System und dem vorgeschlagenen Verfahren besonders einfach als Zustandsänderung erfasst, weitergeleitet, verarbeitet und abgerechnet werden. Die erforderlichen Parameter können bevorzugt sowohl als Zustands- (Bsp.: verbrauchtes Luftvolumen) als auch als Betriebsparameter (Bsp.: Bewegungen einer Druckluftpumpe) vorliegen und insbesondere redundante Information zur Vermeidung von Fehlern umfassen.

Darüber hinaus ermöglichen das vorgeschlagene System und das vorgeschlagene Verfahren eine Individualisierung von Geräten, Komponenten und/oder Objekten, die früher nicht oder nur mit sehr großem Aufwand möglich war. Beispielsweise können in Produktions- oder Verpackungsmaschinen alle abgegebenen Produkte oder Erzeugnisse mit einem individualisierten Siegel oder einer individuellen digitalen Signatur versehen werden, die beispielsweise als individualisierte Banderole um das Produkt gebunden wird, wobei eine solche Banderole beispielsweise einen einzigartigen und eindeutigen Code, beispielsweise einen Bar- oder QR-Code, aufweisen kann, der während der Lebenszeit des Produkts immer wieder eingelesen und nachverfolgt werden kann. Dadurch können Produkte getrackt werden und Daten zum Produktlebenszyklus ermittelt werden, mit denen die Produkte weiter verbessert werden können.

Es ist im Sinne der Erfindung bevorzugt, dass der Arbeitsprozess mindestens einen Prozess-Schritt umfasst. Dies bedeutet im Sinne der Erfindung bevorzugt, dass der Arbeitsprozess einen oder mehrere Prozess-Schritte umfassen kann. Vorzugsweise ändert sich bei der Durchführung des Arbeitsprozesses mindestens ein Zustand des Objekts, d.h. es können ein oder mehrere Zustände des Objekts verändert werden. Es kann im Sinne der Erfindung bevorzugt sein, dass je ein Zustand des Objekts mit einem eigenen Prozess-Schritt verändert wird. Es kann aber alternativ auch bevorzugt sein, dass zur Änderung eines Zustands des Objekts mehrere Prozess-Schritte erforderlich sind oder dass mit einem Prozess-Schritt mehrere Objektszustände verändert werden können.

Der Begriff "Zustand eines Objekts" beschreibt im Sinne der Erfindung bevorzugt den Zustand, den ein Objekt hinsichtlich einer Eigenschaft aufweisen kann. Wenn das Objekt beispielsweise von einem Briefumschlag gebildet wird, so kann der Briefumschlag bedruckt oder unbedruckt, frankiert oder unfrankiert, offen oder verschlossen vorliegen. Diese Objektszustände werden im Sinne der Erfindung als binäre Zustände oder binäre Eigenschaften des Objekts bezeichnet, weil sie in zwei voneinander verschiedenen Ausprägungen vorliegen können. Die binären Zustände repräsentieren vorzugsweise disjunkte Teilmengen des Zustandsraumes, wobei der Zustandsraum vorzugsweise von zwei disjunkten Teilmengen gebildet wird und das Objekt jeweils in einem Zustand vorliegen kann, der entweder einer ersten oder einer zweiten Teilmenge des Zustandsraumes zugeordnet wird. Die Überführung des Objekts von einem ersten zu einem zweiten Zustand erfolgt bevorzugt mit der Arbeitsstation des vorgeschlagenen Systems, wobei die Arbeitsstation, indem ein Prozess-Schritt ausgeführt wird, diese Überführung von einem ersten in einen zweiten binären Zustand bewirkt.

Es kann im Sinne der Erfindung aber auch bevorzugt sein, dass die Objektszustände kontinuierliche Zustände sind, wobei die Zustände vorzugsweise fließend ineinander übergehen und keine disjunkten Teilmengen des Zustandsraumes bilden.

Wenn das Objekt beispielsweise von einem Briefumschlag gebildet wird, kann der Arbeitsprozess beispielsweise darin bestehen, dass der Briefumschlag frankiert und verschlossen werden soll. In diesem Fall besteht der Arbeitsprozess aus zwei Prozess-Schritten - Frankieren und Verschließen - und hinsichtlich beider Eigenschaften, die mit dem jeweils einen Prozess-Schritt verändert werden, liegen binäre Objektszustände vor, nämlich frankiert und unfrankiert, sowie offen und geschlossen.

Es kann im Sinne der Erfindung auch bevorzugt sein, dass durch die Durchführung eines Prozess-Schritts an einem Objekt - zum Beispiel dem Briefumschlag - der Zustand eines anderen Objekts geändert wird. Wenn das Frankieren des Briefumschlags beispielsweise durch eine Frankiermaschine durchgeführt wird und der Briefumschlag dadurch von einem ersten Zustand (unfrankiert) in einen zweiten Zustand (frankiert) überführt wird, so kann durch diese Zustandsänderung gleichzeitig ein Zahlenwert, der in der Frankiermaschine gespeichert ist, vermindert werden.

Beispielsweise kann in der Frankiermaschine ein Guthabenwert gespeichert sein, der einem Geldbetrag entspricht, mit dem ein Nutzer eine Frankiermaschine aufgeladen hat, um damit seine täglich ausgehende Post zu frankieren. Wenn nun ein Briefumschlag frankiert wird, kann diesem Frankiervorgang ein Zahlenwert zugeordnet werden, je nachdem welches Postprodukt für die Frankierung des Briefumschlags ausgewählt wurde. Hierbei kann es sich beispielsweise um einen Portobetrag für einen Standardbrief, einen Maxibrief oder ein Einschreiben handeln, ohne darauf beschränkt zu sein.

Der in der Frankiermaschine gespeicherte Guthabenwert wird, ausgelöst durch den Frankierungsvorgang, um den Zahlenwert, der dem Postprodukt entspricht oder diesem zugeordnet ist, vermindert. Die Reduzierung des Guthabenwerts entspricht im Sinne der Erfindung bevorzugt der Änderung eines Zustands eines nichtphysischen Objekts. Dabei wird in diesem Fall ein Zustand innerhalb der Frankiermaschine, die in diesem Beispiel vorzugsweise eine Arbeitsstation zur Durchführung des Arbeitsprozesses darstellt, verändert, nämlich von einem ersten, ursprünglichen Guthabenwert auf einen durch den Frankiervorgang reduzierten zweiten Guthabenwert. Mit anderen Worten ändern sich durch den Frankiervorgang die Zustände von zwei Objekten, nämlich der Zustand des Briefumschlags und der Zustand des Guthabenwerts, so dass hier mit einem Prozess-Schritt zwei Zustandsänderungen vorgenommen werden.

In einer bevorzugten Ausführungsform der Erfindung ist die Auditoreinrichtung dazu eingerichtet eine Vorgabeinformation zu empfangen und in Abhängigkeit der Vorgabeinformationen einen Prozess-Schritt des Arbeitsprozesses anzupassen.

Ein "Vorgabeinformation" meint bevorzugt eine Information, welche das System durch eine externe Quelle beispielsweise einen externen Server erhält und welche sich auf das Objekt und/oder einem an dem Objekt vorzunehmenden Arbeitsprozess bezieht.

Beispielsweise kann es sich bei der Vorgabeinformation um eine Prioritätsangabe für ein Objekt oder einer Gruppe von Objekten handeln. In Bezug auf das oben genannte Beispiel der Herstellung von Reisepässen kann beispielsweise die Verarbeitung eines bestimmten Objektes (z.B. der Reisepass einer bestimmten Person) mittels der Vorgabeinformation auf eine erhöhte Priorität gesetzt werden.

Auf Basis der Vorgabeinformation kann die Auditoreinrichtung eine bevorzugte Anpassung von einem oder mehreren Prozessschritten in Bezug auf das Objekt vorsehen. Beispielsweise kann es bevorzugt sein, dass die Reihenfolge der Herstellung der Reisepässe verändert wird und dem Reisepass der betreffenden Person eine vordere Verarbeitungsposition zugeordnet wird.

Ebenso kann es bevorzugt sein, dass zwar die Reihenfolge der Prozessschritte zur Herstellung der Reisepässe nicht verändert wird, jedoch ein für die weitere Verarbeitung vorgesehener Prozessschritt angepasst wird, um eine erhöhte Priorisierung für nachfolgende Prozessschritte zu gewährleisten. Beispielsweise kann es vorgesehen sein, dass in Abhängigkeit der Priorisierung bestimmte Objekte (z.B. die Reisepässe einer bestimmten Person) in ein (separates) Prioritätspostfach sortiert, welches eine besonders zügige Zustellung gewährleistet.

Die vorgeschlagene Ausführungsform erlaubt auf besonders einfache und robuste Weise die Bereitstellung von Premiumdienstleistungen und/oder Premiumprodukten, welche entsprechend vergütet werden können. Mit geringfügigen Anpassungen kann das System somit eine bevorzugte Bearbeitung beispielweise eines Reisepasses gewährleisten.

Ebenso kann die Vorgabeinformation genutzt werden, um den Zustand des Objektes zu ändern. In Bezug auf das Beispiel der Bedruckung bzw. Frankierung von Briefumschlägen kann beispielsweise die Vorgabeinformation eine Anpassung und/oder Ergänzung des Aufdruckes umfassen. So kann mittels der Vorgabeinformation für bestimmte Objekte (beispielsweise für Briefumschläge von oder für bestimmte Kunden) ein individualisierter Aufdruck (Firmenlogo, Grußwort etc.) festgelegt und gewährleistet werden. Auch kann kurzfristig für sämtliche Objekte - beispielsweise Briefumschläge - ein saisonaler Aufdruck aufgebracht werden.

Durch die Bereitstellung einer externen Vorgabeinformation und der beschriebenen Verarbeitung mittels der Auditoreinrichtung ist es vorteilhafterweise möglich auf sichere und robuste Weise auf Änderungen flexibel zu reagieren und die Arbeitsprozesse anzupassen.

Bei der externen Quelle kann es sich bevorzug um einen externen Server, eine externe Datenverarbeitungseinrichtung oder andere Eingabemöglichkeiten handeln, welche geeignet und bestimmt sind, eine Vorgabeinformation an das System weiterzuleiten.

Die individualisierte Anpassung der Prozessschritte für ausgewählte Objekte, kann bevorzugt anhand von Identifikationselementen für die jeweiligen Objekte erfolgen.

In einer bevorzugten Ausführungsform der Erfindung umfasst die Vorgabeinformation eine Information zur Anpassung eines Prozessschrittes für ein Objekt in Abhängigkeit eines Identifikationselementes des Objekts.

Die Zuordnung eines Identifikationselementes zu einem Objekt kann bevorzugt sowohl bereits bei der Herstellung des unbearbeiteten Roh- oder Ausgangs-Objektes erfolgen, als auch während der Durchführung von Prozess-Schritten, bspw. durch eine Arbeitsstation bzw. deren kryptografische Sicherheitseinrichtung, als auch durch die Auditoreinrichtung mit Hilfe der Arbeitsstation. So ist es beispielsweise möglich, dass ein mit dem Objekt verbundener physischer Speicher bereits eine unveränderbare Basis-Identifikation enthält, die durch weitere Prozess-Schritte ergänzt wird. Das Identifikationselement liegt bevorzugt bereits in der Auditoreinrichtung, beispielsweise in einem dafür eingerichteten Speicher, vor, und/oder wird diesem bevorzugt über ein vertrauenswürdiges Medium und/oder auf kryptografisch sichere Weise zugeführt.

Es kann im Sinne der Erfindung bevorzugt sein, dass das Identifikationselement dem Objekt physisch zugeordnet ist. Vorzugsweise wird eine solche Zuordnung auch als physische Verknüpfung zwischen Objekt und Identifikationselement bezeichnet. Eine physische Zuordnung kann beispielsweise darin bestehen, dass ein Speicher oder eine Speichervorrichtung fest mit dem Objekt verbunden vorliegt.

Ein solcher Speicher kann beispielsweise von einem OTP gebildet werden. Der Begriff "OTP" wird im Sinne der Erfindung vorzugsweise als "one time programmable" verstanden. Der Speicher, der vorzugsweise von einem OTP gebildet wird, stellt demnach bevorzugt ein elektronisches Bauteil dar, das insbesondere nur einmal beschrieben werden kann. Dazu umfasst das OTP vorzugsweise einen nichtflüchtigen Speicher, wobei die physische Zuordnung zwischen Objekt und Identifikationselement vorzugsweise dadurch realisiert werden kann, dass das Objekt den OTP-Speicher umfasst, indem diese beiden Gegenstände fest miteinander verbunden vorliegen.

Bevorzugt ist der Speicher auslesbar durch die Auditoreinrichtung, so dass dieser die Zuordnung der Erfassungsinformation zur ID vornehmen kann. Es kann im Sinne der Erfindung auch bevorzugt sein, dass das Identifikationselement dem Objekt logisch zugeordnet ist. Eine logische Zuordnung kann beispielsweise von einer ID gebildet werden, die dem Objekt zugeordnet wird. Es ist im Sinne der Erfindung auch bevorzugt, von einer logischen Verknüpfung zwischen Objekt und Identifikationselement zu sprechen.

Eine ID oder ein ID-Wert ist vorzugsweise dazu in der Lage, eine Unterscheidung von zunächst gleich oder ähnlich erscheinenden Objekten zu ermöglichen, indem beispielsweise den Objekten eine Zahlenkombination oder ein alphanummerischer Code, beispielsweise ein Aktenzeichen, zugeordnet wird, die sich auch bei gleich oder ähnlich erscheinenden Objekten voneinander unterscheiden und dadurch eine Verwechslungsgefahr von Objekten deutlich reduzieren.

Eine logische Verknüpfung wird bevorzugt von dem System, insbesondere der Auditoreinrichtung und/oder einer Arbeitsstation vorgenommen, insbesondere in Verbindung mit einer verbundenen und/oder integrierten Speichereinheit. Es kann dabei bevorzugt sein, dass ein Drucken eines Codes, welcher ein Identifikationselement enthält, zugleich einen Prozess-Schritt umfasst, welcher den Zustand eines Objekts ändert. Beispielsweise kann ein auf ein Objekt gedruckter Code, z. B. in Form eines Barcodes und/oder Frankiercodes, den Zustand eines Objekts zu ändern, insbesondere dessen Wert, und gleichzeitig in dem aufgedruckten Code ein Identifikationselement zu umfassen.

Das vorgeschlagene System umfasst mindestens eine Arbeitsstation, eine Erfassungseinrichtung, eine Steuerungseinrichtung und eine Auditoreinrichtung. Die Arbeitsstation, Erfassungseinrichtung, Steuerungseinrichtung und Auditoreinrichtung werden im Sinne der Erfindung als Systemkomponenten bezeichnet. Der Begriff "mindestens" bedeutet im Sinne der Erfindung bevorzugt, dass das System beispielsweise mindestens eine Arbeitsstation umfasst, dass es aber ebenso bevorzugt sein kann, dass das System zwei oder drei Arbeitsstationen umfasst. Dies gilt analog für alle Systemkomponenten. Es kann auch sein, dass das System neben den genannten Systemkomponenten andere Komponenten umfasst. Es kann im Sinne der Erfindung bevorzugt sein, dass sich die Systemkomponenten gemeinsam an einem Ort befinden. Es kann aber auch bevorzugt sein, dass sich einzelne Systemkomponenten oder Gruppen von Systemkomponenten an unterschiedlichen Orten befinden oder dort aufgestellt sind.

Die Komponenten des Systems sind insbesondere zur Datenverarbeitung eingerichtet, wobei die Komponenten des Systems Mittel umfassen bzw. dafür konfiguriert sind die beschriebenen (bevorzugt computerimplementieren) Verfahrensschritte auszuführen.

Die Erfindung betrifft mithin ein System zur Durchführung eines Arbeitsprozesses an einem Objekt gemäß Anspruch 1.

Die Arbeitsstation ist vorzugsweise dazu eingerichtet, mindestens einen Prozess-Schritt des Arbeitsverfahrens durchzuführen. Das Arbeitsverfahren, das im Sinne der Erfindung bevorzugt auch als Arbeitsprozess bezeichnet wird, umfasst vorzugsweise einen oder mehrere Prozess-Schritte, wobei die Prozess-Schritte mit einer Arbeitsstation oder mehreren Arbeitsstationen des vorgeschlagenen Systems durchgeführt werden können. Eine Arbeitsstation kann beispielsweise eine Frankiermaschine sein, wobei eine Frankiermaschine vorzugsweise ein Mainboard, ein Drucksystem zur Herausgabe beziehungsweise zum Drucken von Briefsendungen, sowie ein Display und mechanische Vorrichtungen zur Beförderung von Umschlägen oder Etikettenstreifen aufweist. Auf dem Mainboard der Frankiermaschine können verschiedene Softwareanwendungen installiert sein und betrieben werden. Es ist im Sinne der Erfindung bevorzugt, dass entsprechende Portowerte oder Portocodes direkt auf einen Briefumschlag oder einen Etikettenstreifen gedruckt werden. Das Drucken eines Portocodes auf einen Briefumschlag beziehungsweise einen Etikettenstreifen wird im Sinne der Erfindung vorzugsweise als "Erzeugung eines Abdrucks" bezeichnet, wobei die Erzeugung des Abdrucks im Sinne dieser Erfindung vorzugsweise einer Änderung des Zustands eines Briefumschlags, d.h. eines Objekts, entspricht. Es ist im Sinne der Erfindung bevorzugt, dass der Abdruck mit Hilfe einer kryptografisch arbeitenden Sicherheitseinrichtung, die vorzugsweise Bestandteil der Frankiermaschine ist, erzeugt wird, die beispielsweise mit der Auditierungseinrichtung des vorgeschlagenen Systems assoziiert sein kann.

Die Erfassungseinrichtung ist vorzugsweise dazu eingerichtet, mindestens einen Betriebsparameter der Arbeitsstation und/oder einen Zustandsparameter des Objekts zu erfassen, wobei jeder Arbeitsstation eine Erfassungseinrichtung zugeordnet ist. Wenn das vorgeschlagene System beispielsweise zwei Arbeitsstationen umfasst, umfasst das System vorzugsweise auch zwei Erfassungseinrichtungen, wobei jeweils eine Arbeitsstation und eine Erfassungseinrichtung einander zugeordnet sind. Der Betriebsparameter beschreibt zum Beispiel, ob eine Arbeitsstation einsatzbereit ist oder nicht. Wenn eine Arbeitsstation beispielsweise von einem Drucker gebildet wird, kann der Zustands-parameter zum Beispiel angeben, dass der Drucker einsatzbereit ist, weil genügend Papier und Tinte zur Erledigung eines durchschnittlichen Druckauftrags vorhanden sind. Es kann aber auch sein, dass zu wenig Papier und/oder Tinte im Drucker vorhanden ist, so dass der Drucker nicht einsatzbereit und in der Lage ist, die gewünschte Funktion, beispielsweise das Bedrucken einer definierten Anzahl von Briefumschlägen, auszuführen. Die beiden unterschiedlichen Betriebszustände des Druckers - "einsatzbereit" und "nicht einsatzbereit" - würden dann von unterschiedlichen Betriebsparametern repräsentiert beziehungsweise wiedergegeben werden.

Es kann im Sinne der Erfindung auch bevorzugt sein, dass die Erfassungseinrichtung mindestens einen Zustandsparameter des Objekts erfasst. Dabei kann es sich beispielsweise um den Zustand eines Briefumschlags handeln, der mit dem Drucker als Arbeitsstation bedruckt werden soll. Beispielsweise kann die Erfassungsstation dazu eingerichtet sein, festzustellen, ob der Briefumschlag "richtig" in der Zuführungsvorrichtung des Druckers eingelegt ist, so dass ein Druckvorgang überhaupt möglich ist. Dies ist beispielsweise nicht der Fall, wenn der Briefumschlag mit der "falschen", nicht zu bedruckenden Seite nach oben in dem Drucker eingelegt ist. Es ist im Sinne der Erfindung bevorzugt, dass das vorgeschlagene System zur Erfüllung verschiedener Funktionen Sensoren umfasst, die die verschiedenen Informationen, die zur Durchführung des Arbeitsverfahrens erforderlich sind, ermitteln und an die entsprechenden Auswerteeinheiten weiterleiten. Dabei kann es sich beispielsweise um Lichtschranken, Kameras, Thermo-Sensoren, optische Sensoren, elektrische Sensoren, magnetische Sensoren und/oder akustische Sensoren handeln, ohne darauf beschränkt zu sein.

Die Steuerungseinrichtung ist vorzugsweise dazu eingerichtet, die Arbeitsstation bei der Durchführung eines Prozess-Schritts des Arbeitsprozesses zu steuern. Insbesondere steuert die Steuerungseinrichtung oder Steuereinrichtung mindestens eine Arbeitsstation bei der Durchführung von mindestens einem Prozess-Schritt des Arbeitsprozesses. Es kann im Sinne der Erfindung auch bevorzugt sein, dass die Steuereinrichtung mehr als eine Arbeitsstation bei der Durchführung von mehr als einem Prozess-Schritt steuert. Die Steuerungseinrichtung ist vorzugsweise dazu eingerichtet, zumindest zu einem Zeitpunkt vor dem Start des Arbeitsprozesses eine Konfigurationsinformation der Erfassungseinrichtung abzufragen. Bei der Konfigurationsinformation handelt es sich vorzugsweise um die Betriebsparameter und/oder Zustandsdaten, die die Erfassungseinrichtung von den Arbeitsstationen des vorgeschlagenen Systems ermittelt. Mit anderen Worten stellen die Konfigurationsinformationen vorzugsweise solche Informationen dar, die den Zustand der Systemkomponenten abbilden und/oder beschreiben. Die Gesamtheit der Parameter, die zur Beschreibung des Zustands der Systemkomponenten verwendet werden, bilden somit vorzugsweise die Konfigurationsinformationen, die von der Steuereinrichtung abgefragt werden, wobei die Erfassungseinrichtung die Informationsgeberin darstellt, die die entsprechenden Daten von den Systemkomponenten, insbesondere den Arbeitsstationen, die die Prozess-Schritte des Arbeitsverfahrens durchführen, erhebt. Die Steuereinrichtung ist in diesem Fall die Informationsempfängerin.

Ferner umfasst das vorgeschlagene System eine Auditoreinrichtung, die vorzugsweise dazu eingerichtet ist, die von der Erfassungseinrichtung erhobenen Konfigurationsinformationen zu empfangen und zu überprüfen. Die hier beschriebenen Verfahrensschritte des vorgeschlagenen Auditierungsverfahrens werden vorzugsweise als "Empfang" beziehungsweise "Überprüfung der Konfigurationsinformation durch die Auditoreinrichtung" bezeichnet. Die Überprüfung erfolgt vorzugsweise durch einen Abgleich von IDs oder ID-Werten, die den Systemkomponenten zugeordnet sind, wobei insbesondere die Ist-IDs der Systemkomponenten mit den Soll-IDs, die im System, vorzugsweise in der Steuereinrichtung oder im Auditor, hinterlegt sind, verglichen werden. Bei der Überprüfung wird demnach vorzugsweise festgestellt, ob die Ist-IDs, die den aktuellen tatsächlichen Zustand einer Systemkomponente beschreiben, und die Soll-IDs, die im System vorzugsweise für jede Systemkomponenten hinterlegt sind, übereinstimmen.

Die Überprüfung der Konfigurationsinformation durch die Auditoreinrichtung kann auch eine Verifikation der Konfigurationsinformation umfassen. Mit anderen Worten ist die Auditoreinrichtung dazu eingerichtet, die Echtheit von Systemkomponenten oder Bauteilen des vorgeschlagenen Systems zu überprüfen. Vorzugsweise ist die Auditoreinrichtung dazu eingerichtet, die Konfigurationsinformation zu verifizieren.

Wenn das System beispielsweise eine Kaffeemaschine umfasst, kann mit der Auditoreinrichtung festgestellt werden, ob die Kaffeepads des Herstellers der Kaffeemaschine verwendet werden oder nicht. Diese Kaffeepads, die vom Hersteller der Kaffeemaschine hergestellt werden, werden im Sinne der Erfindung als "echte" Kaffeepads bezeichnet. Bei einem negativen Beurteilungsergebnis, d.h. wenn Kaffeepads eines anderen, gegebenenfalls günstigeren Mitbewerbers verwendet werden, kann beispielsweise die Abgabe eines Kaffeegetränkes verweigert werden. Ähnliche Verifikationsprozesse sind bei Druckern oder vielen technischen Geräten denkbar, bei denen Komponenten oder Verbrauchsmaterial regelmäßig nachgefüllt oder erneuert werden müssen, was einen nicht unerheblichen Anteil am finanziellen Erfolg eines Produkts ausmachen kann.

Das vorgeschlagene System oder das vorgeschlagene Verfahren kann somit auch dazu beitragen, die Erfüllung von Service Level Agreements oder Wartungsverträgen zu überprüfen. Wenn ein Unternehmen A beispielsweise mit einem Dienstleister B einen Wartungsvertrag zur Wartung einer Gruppe von technischen Geräten abgeschlossen hat, so kann es Bestandteil des Wartungsvertrags sein, dass eine Betriebszeit pro Maschine vereinbart ist, nach der automatisch die Wartung von Dienstleister B durchgeführt wird. Wenn die Geräte vom Unternehmen A durch ein vorgeschlagenes System oder das vorgeschlagene Verfahren regelmäßig auditiert werden, wird das Risiko eines Betrugs, um die Wartungsintervalle zu verlängern, wesentlich reduziert, weil das Unternehmen A dann nicht mehr die interne Uhr in seinen Geräten manipulieren kann, um gegenüber dem Dienstleister B zu behaupten, die Anzahl der Betriebsstunden, die eine Wartung erforderlich machen, seien noch nicht zusammengekommen. Somit tragen das vorgeschlagene System und das vorgeschlagene Verfahren dazu bei, die Manipulationsgefahr von an sich leicht zu manipulierenden mechanischen oder elektromechanischen Geräten erheblich zu reduzieren.

Als Ergebnis der Überprüfung der Konfigurationsinformation durch die Auditoreinrichtung wird die Auditierungsinformation erhalten, was im Sinne der Erfindung als Ableitung der Auditierungsinformation aus den Konfigurationsinformationen bezeichnet wird. Mit anderen Worten werden im Auditor des vorgeschlagenen Systems die Konfigurationsinformationen mit Soll-Daten verglichen, wobei das informationstechnologische Ergebnis dieses Abgleichs beziehungsweise dieser Überprüfung vorzugsweise als "Auditierungsinformation" bezeichnet wird. Mit noch anderen Worten ist es im Sinne der Erfindung bevorzugt, dass die Auditierungsinformation aus der Konfigurationsinformation abgeleitet werden kann beziehungsweise dass die Auditierungsinformation aus der Konfigurationsinformation ableitbar ist. Beispielsweise kann das Auditierungsergebnis positiv sein, wenn die Konfigurationsdaten von allen Systemkomponenten mit den entsprechenden Soll-Werten übereinstimmen, während ein negatives Auditierungsergebnis erhalten wird, wenn die Konfigurationsdaten nicht mit den Soll-Werten übereinstimmen, wobei beispielsweise eine Nicht-Übereinstimmung ausreicht, um ein insgesamt negatives Auditierungsergebnis zu erhalten. Die Ableitung der Auditierungsinformation von den Konfigurationsdaten erfolgt insbesondere in Abhängigkeit vom Ergebnis des Abgleichs der Ist- und Solldaten beziehungsweise in Abhängigkeit vom Ergebnis der Überprüfung der Konfigurationsinformation. Dieser Vorgang wird im Sinne der Erfindung vorzugsweise als "Erstellung einer Auditierungsinformation durch die Auditoreinrichtung in Abhängigkeit von einem Ergebnis der Überprüfung der Konfigurationsinformation" bezeichnet.

Vorzugsweise ist die Auditoreinrichtung dazu eingerichtet, die Auditierungsinformation an die Steuereinrichtung des vorgeschlagenen Systems weiterzuleiten beziehungsweise dorthin zu senden. Dieser Vorgang wird im Kontext des vorgeschlagenen Auditierungsverfahrens vorzugsweise als "Sendung der Auditierungsinformation durch die Auditoreinrichtung an die Steuereinrichtung" bezeichnet. Dazu umfasst der Auditor vorzugsweise die entsprechenden Kommunikationsmittel. In diesem Zusammenhang stellt der Auditor den Informationsgeber und die Steuereinrichtung den Informationsempfänger dar. Vorzugsweise ist die Steuereinrichtung dazu eingerichtet, die Auditierungsinformation zu verarbeiten und in Abhängigkeit von der Auditierungsinformation den Arbeitsprozess, der mit dem vorgeschlagenen System durchgeführt werden soll, zu starten beziehungsweise zu veranlassen, dass er gestartet wird. Diese Vorgänge werden im Kontext des vorgeschlagenen Auditierungsverfahrens vorzugsweise als "Verarbeitung der Auditierungsinformation durch die Steuereinrichtung" und "Start des Arbeitsprozesses durch die Steuereinrichtung in Abhängigkeit von der Auditierungsinformation" bezeichnet. Bei einem positiven Auditierungsergebnis kann beispielsweise in der Steuereinrichtung ein Startsignal für das Arbeitsverfahren erzeugt und an die Arbeitsstationen, an denen die Prozess-Schritte durchgeführt werden, gesendet werden. Bei einem negativen Auditierungsergebnis unterbleibt die Erzeugung und der Versand eines entsprechenden Startsignals. Das beschriebene Verfahren kann bei einem negativen Auditierungsergebnis beispielsweise zu einem späteren Zeitpunkt wiederholt werden und wenn dann ein positives Auditierungsergebnis erhalten wird, zur Durchführung des Arbeitsprozesses führen.

Es ist im Sinne der Erfindung bevorzugt, dass das vorgeschlagene System dazu eingerichtet ist, eine Watchdog-Funktion auszuführen, indem das vorgeschlagene Auditierungsverfahren regelmäßig durchgeführt wird und/oder durch ein Ereignis initiiert wird. Bei dem Ereignis, das zur Initiierung beziehungsweise zur Durchführung des Auditierungsverfahrens führt, kann es sich beispielsweise um eine Änderung der Systemkonfigurierung handeln. Es kann beispielsweise bevorzugt sein, dass das vorgeschlagene Auditierungsverfahren eine Watchdog-Funktion umfasst, indem die unten genannten Verfahrensschritte a) bis g) ganz oder teilweise regelmäßig durchgeführt werden und/oder ihre Durchführung durch ein festzulegendes Ereignis initiiert wird. Insbesondere kann ein Auditierungszyklus, der beispielsweise die unten genannten Verfahrensschritte a) bis g) umfasst, regelmäßig durchgeführt werden beziehungsweise bei Auftreten eines zuvor definierten Ereignisses veranlasst werden. Es kann im Sinne der Erfindung auch bevorzugt sein, dass im System hinterlegt wird, in welchen Abständen ein Auditierungsverfahren durchgeführt wird. Wenn das System beispielsweise von einem Netz von technischen Geräten gebildet wird, kann im System, zum Beispiel in der Steuereinrichtung oder im Auditor, eingestellt werden, dass ein Auditierungsverfahren in Abständen von Minuten, Stunden, Tagen, Wochen, Monaten und Jahren durchgeführt wird, je nach Bedarf, Wartungsaufwand und/oder Benutzungsdauer und -frequenz der technischen Geräte.

Es ist im Sinne der Erfindung beispielsweise bevorzugt, dass das vorgeschlagene Verfahren vor Beginn eines Arbeitsverfahrens durchgeführt wird. Beispielsweise kann es bei Inbetriebnahme eines neu zusammengestellten Systems aus verschiedenen Systemkomponenten durchgeführt werden oder in einer Betriebspause, um die Betriebs- und/oder Zustandsparameter der Systemkomponenten zu ermitteln. In diesem Zusammenhang ist es ganz besonders bevorzugt, wenn die Erfassungseinrichtung nicht nur binare Zustände der Systemkomponenten ermittelt, wie "einsatzbereit" und "nicht-einsatzbereit", sondern auch kontinuierliche Zwischenzustände ermitteln und weiterleiten kann, wie zum Beispiel Füllstände oder Abnutzungs- und Verschleißgrade. Diese können vorzugsweise in Prozent (%) angegeben werden und Werte zwischen 0 und 100 % annehmen, wobei beispielsweise Werte von 0,3 %; 12,5 %; 27,85 % und alle möglichen anderen Werte angenommen werden können. Es kann im Sinne der Erfindung auch bevorzugt sein, prozentuale Wertebereiche zusammenzufassen und einem gemeinsamen Betriebs-und/oder Zustandsparameter zuzuordnen. Beispielsweise können bei der Beschreibung des Füllstands einer Tintenpatrone in einer Druckeinrichtung alle Füllstände unter 15 % als "nicht einsatzbereit" interpretiert werden, während die Füllstände über 15 % als "einsatzbereit" interpretiert werden.

Es ist im Sinne der Erfindung bevorzugt, dass das beschriebene Verfahren als Auditierungsverfahren bezeichnet wird. Es wird im Folgenden detailliert als zweiter Aspekt der Erfindung neben dem vorgeschlagenen System beschrieben. In diesem Aspekt betrifft die Erfindung ein Verfahren zur Durchführung eines Arbeitsprozesses an einem Objekt gemäß Anspruch 10.

Die Definitionen, vorteilhafte Wirkungen und überraschende Vorteile der Erfindung, die hinsichtlich des vorgeschlagenen Systems beschrieben wurden, gelten für das vorgeschlagene Verfahren analog, und umgekehrt.

Aus den weiteren Unteransprüchen und der Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden.

Es ist im Sinne der Erfindung bevorzugt, dass das System dazu eingerichtet ist, eine Totmann-Funktion auszuführen, bei der die Durchführung des Arbeitsprozesses gestoppt wird, wenn ein erwartetes Ereignis nicht eintritt oder ein unerwartetes Ereignis eintritt. Abweichend davon kann auch in einem nachfolgenden Prozess-Schritt das Objekt invalidiert werden, das heisst durch eine gezielte Fehlbearbeitung eine eventuelle Gültigkeit des vorigen Prozess-Schrittes und damit eine valide Zwischenversion des Objektes verhindert werden. Vorzugsweise kann das vorgeschlagene Auditierungsverfahren eine Totmann-Funktion oder Invalidierungs-Funktion umfassen, durch die die Durchführung des Arbeitsprozesses gestoppt oder gezielt verändert werden kann, wenn ein erwartetes Ereignis nicht eintritt oder wenn ein unerwartetes Ereignis eintritt.

Es kann also bevorzugt sein, dass das Verfahren eine Invalidierungs-Funktion umfasst, durch die die Durchführung des Arbeitsprozesses gezielt verändert wird, wenn ein erwartetes Ereignis nicht eintritt oder ein unerwartetes Ereignis eintritt.

Es ist im Sinne der Erfindung bevorzugt, dass das System Mittel umfasst, mit denen das vorgeschlagene System dazu eingerichtet ist, unerwartete Änderungen des Systems zu erfassen. Vorzugsweise sind mit dem Verfahren unerwartete Änderungen eines Systems aus Arbeitsstation, Erfassungseinrichtung, Steuereinrichtung und Auditoreinrichtung erfassbar, wobei das System Mittel umfasst, mit denen das System dazu eingerichtet ist, unerwartete Änderungen des Systems zu erfassen. Dabei kann es sich insbesondere um Sensoren handeln, die dazu eingerichtet sind, unerwartete Änderungen an den Systemkomponenten, den Bauteilen der Systemkomponenten oder an dem Objekt, das durch das Arbeitsverfahren verändert werden soll, festzustellen beziehungsweise zu detektieren. Die Sensoren können vorzugsweise ausgewählt sein aus einer Gruppe umfassend Lichtschranken, Kameras, Thermo-Sensoren, optische Sensoren, elektrische Sensoren, magnetische Sensoren und/oder akustische Sensoren, ohne darauf beschränkt zu sein.

Die Erfindung wird anhand der nachfolgenden Figuren näher beschrieben. Es wird angemerkt, dass die Zeichnungen lediglich beispielhaft der Klarstellung der Erfindung dienen und keinen einschränkenden Charakter haben.

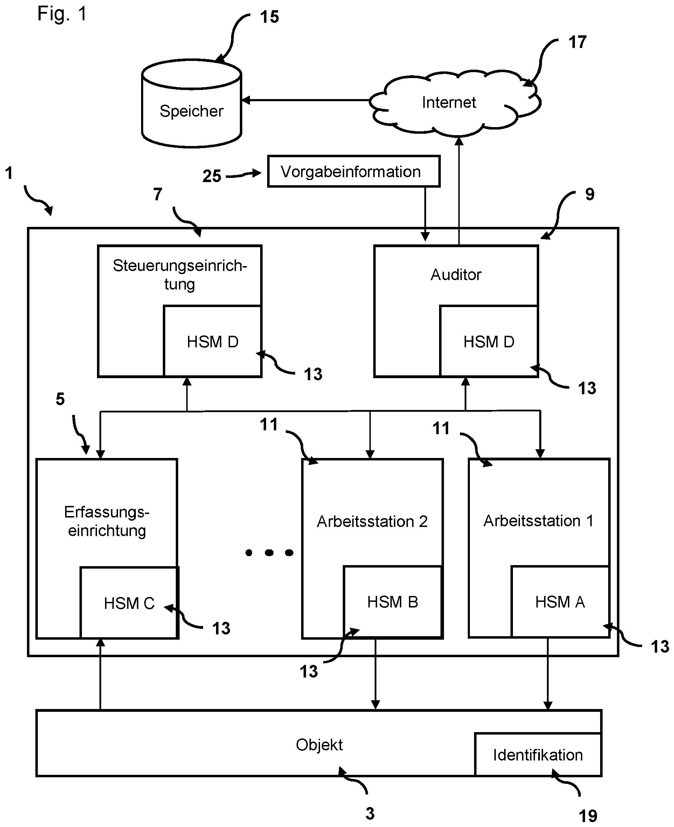

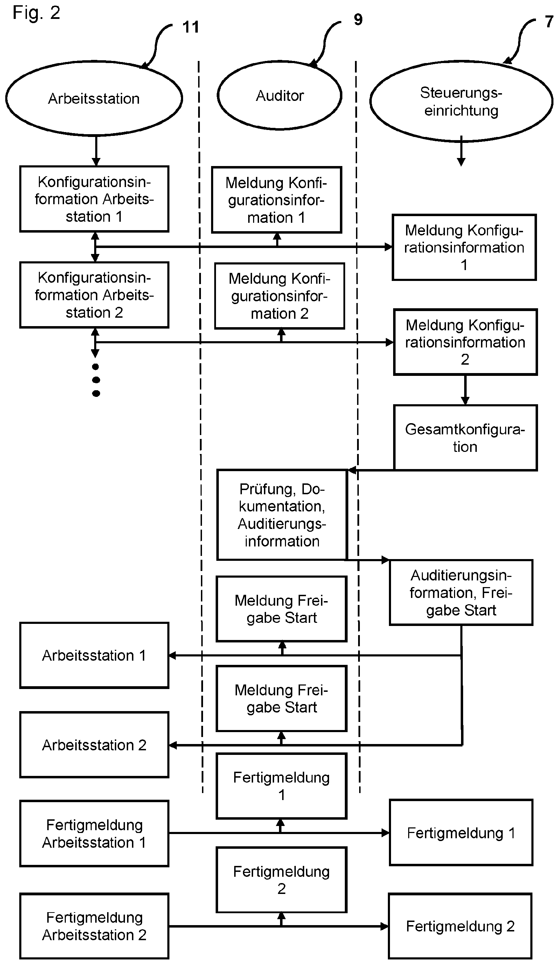

- Figuren 1 und 2:: Schaubilder zur Veranschaulichung der Erfindung

Figur 1 zeigt ein System **1,** wobei an dem Objekt **3** ein Arbeitsprozess durch die Arbeitsstationen **11** durchgeführt wird und dessen Zustand des Objekts verändert wird. Die Erfassungsinformation, welche einen Zustands- und/oder Betriebsparameter repräsentiert, wird durch die Erfassungseinrichtung **5** erfasst. Die Steuereinrichtung **7** kann nun vor einem Start eines weiteren Arbeitsprozesses eine Konfigurationsinformation der Erfassungseinrichtung **5** abfragen. Die Auditoreinrichtung 9 empfängt die Konfigurationsinformation und überprüft diese. In Abhängigkeit eines Ergebnisses der Überprüfung der Konfigurationsinformation erstellt di eine Auditierungsinformation und sendet diese an die Steuerungseinrichtung. In Abhängigkeit von der Auditierungsinformation startet die Steuerungseinrichtung **7** einen Arbeitsprozess oder nicht. Die Konfigurationsinformation umfasst bevorzugt die Betriebsparameter und/oder Zustandsdaten, die die Erfassungseinrichtung **5** von den Arbeitsstationen **11** ermittelt und kann bevorzugt auch ein Identifikationselement des Objekts **3** umfassen. Die Prozesse und/oder Konfigurationsinformation können vorzugsweise auch in einem Speicher **15** im Netzwerk, z.B. als Teil des Internets **17** gespeichert werden. Vorzugsweise werden in den Komponenten HSM **13** zur Erhöhung der Sicherheit eingesetzt. Bevorzugt ist zudem die Auditoreinrichtung **9** dafür eingerichtet eine Vorgabeinformation **25** von einer externen Quelle, beispielsweise einem externen Server **15,** zu empfangen und in Abhängigkeit der Vorgabeinformationen **25** einen Prozess-Schritt des Arbeitsprozesses anzupassen.

Figur 2 stellt einen typischen Prozessflow vor. Der Auditor **9** fragt dabei Informationen der Arbeitsstation **11** ab und überprüft daraufhin Konfigurationsinformationen, welche bevorzugt an die Steuerungseinrichtung **7** übermittelt werden. Der Auditor **9** kann so die Freigabe von Prozessen einleiten. Auch eine Prüfung, Dokumentation und Auditierung kann vom Auditor **9** vorgenommen werden.

### Bezugszeichenliste

- 1: System
- 3: Objekt
- 5: Erfassungseinrichtung
- 7: Steuerungseinrichtung
- 9: Audtior bzw. Auditoreinrichtung
- 11: Arbeitsstation
- 13: HSM
- 15: Speicher
- 17: Internet
- 19: Identifikationselement
- 25: Vorgabeinformation
- 5: Erfassungseinrichtung
- 7: Steuerungseinrichtung
- 9: Audtior bzw. Auditoreinrichtung
- 11: Arbeitsstation
- 13: HSM
- 15: Speicher
- 17: Internet
- 19: Identifikationselement
- 25: Vorgabeinformation

## Patentansprüche

1. System (1) zur Durchführung eines Arbeitsprozesses an einem Objekt (3), wobei der Arbeitsprozess mindestens einen Prozess-Schritt umfasst und wobei durch den Arbeitsprozess mindestens ein Zustand des Objekts (3) zumindest zeitweise verändert wird, wobei das System (1) mindestens folgende Komponenten umfasst:
- eine Arbeitsstation (11) eingerichtet zur Durchführung des mindestens einen Prozess-Schritts des Arbeitsprozesses,
- eine Erfassungseinrichtung (5) eingerichtet zum Erfassen von mindestens einem Zustandsparameter und mindestens einem Betriebsparameter der Arbeitsstation (11) und/oder des Objekts (3), wobei der Arbeitsstation (11) die Erfassungseinrichtung (5) zugeordnet ist;
- eine Steuereinrichtung (7) eingerichtet zum Steuern der Arbeitsstation (11) bei Durchführung eines Prozess-Schritts des Arbeitsprozesses und
- eine Auditoreinrichtung (9)
wobei
die Steuereinrichtung (7) eingerichtet ist, zu einem Zeitpunkt vor einem Start des Arbeitsprozesses eine Konfigurationsinformation umfassend den mindestens einen Zustandsparameter und den mindestens einen Betriebsparameter abzufragen, wobei der mindestens eine Zustandsparameter einen systemexternen Parameter beschreibt, welcher von außen auf die Arbeitsstation (11) und/oder das Objekt (3) einwirkt und der mindestens eine Betriebsparameter einen systeminternen Parameter beschreibt, welcher einen aktuellen Zustand der Arbeitsstation (11) und/oder des Objektes (3) betrifft
und die Auditoreinrichtung (9) eingerichtet ist, die Konfigurationsinformation zu empfangen und zu überprüfen und eine Auditierungsinformation in Abhängigkeit eines Ergebnisses der Überprüfung der Konfigurationsinformation zu erstellen und die Auditierungsinformation an die Steuereinrichtung (7) zu senden, und
die Steuereinrichtung (7) eingerichtet ist, die Auditierungsinformation zu verarbeiten und den Arbeitsprozess in Abhängigkeit von der Auditierungsinformation zu starten oder nicht zu starten, und wobei das System zusätzlich dazu eingerichtet beim Steuern der Arbeitsstation (11) bei der Durchführung des Arbeitsprozesses Wechselwirkungen zwischen den Zustandsparametern und den Betriebsparametern zu berücksichtigen.

2. System (1) nach Anspruch 1,
**dadurch gekennzeichnet, dass**
die Erfassungseinrichtung zum Erfassen eines ID-Wert der Arbeitsstation (11) und/oder des Objektes (3) eingerichtet ist und die Konfigurationsinformation den ID-Wert der Arbeitsstation (11) und/oder des Objektes (3) umfasst.

3. System (1) nach einem oder mehreren der vorhergehenden Ansprüche,
**dadurch gekennzeichnet, dass**
die Auditierungsinformation aus der Konfigurationsinformation ableitbar ist.

4. System (1) nach einem oder mehreren der vorhergehenden Ansprüche,
**dadurch gekennzeichnet, dass**
die Auditoreinrichtung eine Sicherheitseinrichtung der Arbeitsstation ist.

5. System (1) nach einem oder mehreren der vorhergehenden Ansprüche,
**dadurch gekennzeichnet, dass**
die Auditoreinrichtung dazu eingerichtet ist, die Konfigurationsinformation zu verifizieren.

6. System (1) nach einem oder mehreren der vorhergehenden Ansprüche,
**dadurch gekennzeichnet, dass**
die Auditoreinrichtung dazu eingerichtet ist, die Auditierungsinformation mit kryptografischen Mitteln abzusichern.

7. System (1) nach einem oder mehreren der vorhergehenden Ansprüche,
**dadurch gekennzeichnet, dass**
die Auditoreinrichtung dazu eingerichtet ist, eine Vorgabeinformation zu empfangen und in Abhängigkeit der Vorgabeinformationen einen Prozess-Schritts des Arbeitsprozesses anzupassen.

8. System (1) nach einem oder mehreren der vorhergehenden Ansprüche,
**dadurch gekennzeichnet, dass**
das System dazu eingerichtet ist, eine Watchdog-Funktion auszuführen, indem ein Auditierungsverfahren regelmäßig durchgeführt wird und/oder durch ein Ereignis initiiert wird.

9. System (1) nach einem oder mehreren der vorhergehenden Ansprüche,
**dadurch gekennzeichnet, dass**
das System zusätzlich dazu eingerichtet ist, eine Totmann-Funktion oder Invalidierungs-Funktion auszuführen, durch die die Durchführung des Arbeitsprozesses gestoppt oder gezielt verändert werden kann, wenn ein für die Durchführung des Arbeitsprozesses an dem Objekt (3) erwartetes Ereignis nicht eintritt oder wenn ein für die Durchführung des Arbeitsprozesses an dem Objekt (3) nicht erwartetes Ereignis eintritt.

10. Verfahren zur Durchführung eines Arbeitsprozesses an einem Objekt (3), wobei der Arbeitsprozess von einer Arbeitsstation (11) durchgeführt wird und mindestens einen Prozess-Schritt umfasst und wobei durch den Arbeitsprozess mindestens ein Zustand des Objekts (3) zumindest zeitweise verändert wird,
**wobei das Verfahren folgende Schritte umfasst:**
a) Abfrage einer Konfigurationsinformation einer Erfassungseinrichtung (5) durch eine Steuereinrichtung (7) an einem Zeitpunkt vor einem Start des Arbeitsprozesses wobei die Erfassungseinrichtung (5) der Arbeitsstation (11) zugeordnet ist und dazu eingerichtet ist, mindestens einen Zustandsparameter und mindestens einen Betriebsparameter der Arbeitsstation (11) und/oder des Objekts (3) zu erfassen, wobei der mindestens eine Zustandsparameter einen systemexternen Parameter beschreibt, welcher von außen auf die Arbeitsstation (11) und/oder das Objekt (3) einwirkt und der mindestens eine Betriebsparameter einen systeminternen Parameter beschreibt, welcher einen aktuellen Zustand der Arbeitsstation (11) und/oder des Objektes (3) betrifft
b) Empfang der Konfigurationsinformation, umfassend den mindestens einen Zustandsparameter und den mindestens einen Betriebsparameter durch eine Auditoreinrichtung (9),
c) Überprüfung der Konfigurationsinformation durch die Auditoreinrichtung (9),
d) Erstellung einer Auditierungsinformation durch die Auditoreinrichtung (9) in Abhängigkeit von einem Ergebnis der Überprüfung der Konfigurationsinformation,
e) Sendung der Auditierungsinformation durch die Auditoreinrichtung (9) an die Steuereinrichtung (7),
f) Verarbeitung der Auditierungsinformation durch die Steuereinrichtung (7) und
g) Start des Arbeitsprozesses durch die Steuereinrichtung (7) in Abhängigkeit von der Auditierungsinformation,
wobei das Verfahren zusätzlich beim Steuern der Arbeitsstation (11) bei der Durchführung des Arbeitsprozesses Wechselwirkungen zwischen den Zustandsparametern und den Betriebsparametern berücksichtigt.

11. Verfahren nach dem vorherigen Anspruch,
**dadurch gekennzeichnet, dass**
das Verfahren eine Watchdog-Funktion umfasst, indem die Verfahrensschritte a) bis g) ganz oder teilweise regelmäßig durchgeführt werden und/oder ihre Durchführung durch ein Ereignis initiiert wird.

12. Verfahren nach einem der vorhergehenden Ansprüche 10 oder 11,
**dadurch gekennzeichnet, dass**
wobei zudem die Durchführung des Arbeitsprozesses durch Ausführen einer Totmann-Funktion oder Invalidierungs-Funktion gestoppt oder gezielt verändert wird, wenn ein für die Durchführung des Arbeitsprozesses an dem Objekt (3) erwartetes Ereignis nicht eintritt oder wenn ein für die Durchführung des Arbeitsprozesses an dem Objekt (3) nicht erwartetes Ereignis eintritt.

## Claims

1. System (1) for executing a work process on an object (3), wherein the work process comprises at least one process step and wherein at least one state of the object (3) is changed at least temporarily by the work process, wherein the system (1) comprises at least the following components:
- a work station (11) adapted to execute the at least one process step of the work process,
- an acquisition device (5) adapted to acquire at least one status parameter and/or operating parameter of the work station (11) and/or of the object (3), the work station (11) being assigned the acquisition device (5),
- a control device (7) is adapted to control the work station (11) while executing a process step of the work process, and
- an auditor device (9)
**wherein**
the control device (7) is adapted to interrogate a configuration information comprising the at least one status parameter and the at least one operating parameter of the acquisition device (5) at a time point before a start of said work process,
wherein the at least one status parameter describes a parameter external to the system which acts externally on the work station (11) and/or the object (3), and the at least one operating parameter describes a parameter internal to the system which relates to a current status of the work station (11) and/or of the object (3),
and the auditor device (9) is adapted to receive and verify the configuration information and to generate an auditing information depending on a result of the verification of the configuration information and to send the auditing information to the control device (7), and
the control device (7) is adapted to process the auditing information and depending on the auditing information to start or not to start the work process,. wherein the system is additionally adapted to take into account interactions between the status parameters and the operating parameters when controlling the work station (11) while executing the work process.

2. System (1) according to claim 1,
**characterized in that**
the acquisition device is adapted to acquire an ID value of the workstation (11) and/or the object (3) and the configuration information is at least an ID, an acquisition information and/or a status information of said acquisition device.

3. System (1) according to one or more of the preceding claims,
**characterized in that**
the auditing information can be derived from the configuration information

4. System (1) according to one or more of the preceding claims
**characterized in that**
the auditor device is safety device of said work station.

5. System (1) according to one or more of the preceding claims
**characterized in that**
the auditor device is adapted to verify the configuration information.

6. System (1) according to one or more of the preceding claims
**characterized in that**
the auditor device is adapted to secure the auditing information by cryptographic means.

7. System (1) according to one or more of the preceding claims
**characterized in that**
the auditor device is adapted to receive input information and to adjust a process step of the work process depending on the input information.

8. System (1) according to one or more of the preceding claims
**characterized in that**
the system is adapted to perform a watchdog function by performing an auditing method at regular intervals and/or upon initiation by an event.

9. System (1) according to one or more of the preceding claims
**characterized in that**
the system (1) is adapted to perform a dead man's switch or invalidation function, by which the execution of the work process is stopped or selectively changed, if an event expected for the execution of the work process on the object (3) does not occur or if an event unexpected for the execution of the work process on the object (3) does occur.

10. Method for executing a work process on an object (3), wherein the work process is executed by a work station (11) and comprises at least one process step and wherein at least one state of the object (3) is changed at least temporarily by the work process, **the method comprising the following steps:**
a) interrogation of a configuration information of an acquisition device (5) by a control device (7) at a time point before starting the work process,
wherein the acquisition device (5) is assigned to the work station (11) and is adapted to detect at least one status parameter and/or at least one operating parameter of the work station (11) and/or the object (3),
wherein the at least one status parameter describes a parameter external to the system which acts externally on the work station (11) and/or the object (3), and the at least one operating parameter describes a parameter internal to the system which relates to a current status of the work station (11) and/or of the object (3),
b) receipt of the configuration information by an auditor device (9),
c) verification of the configuration information by the auditor device (9),
d) generation of an auditing information by the auditor device (9) depending on a result of the verification of the configuration information,
e) sending of the auditing information by the auditor device (9) to the control device (7),
f) processing of the auditing information by the control device (7) and
g) starting of the work process by the control device (7) in dependence on the auditing information, wherein the method takes into account interactions between the status parameters and the operating parameters when controlling the work station (11) while executing the work process..

11. Method according to the previous claim
**characterized in that**
the method comprises a watchdog function **in that** the method steps a) to g) are executed in whole or in part regularly and/or their execution is initiated by an event.

12. Method according to one of the preceding claims 10 or 11,
**characterized in that**
the execution of the work process is stopped or selectively changed by a dead man's switch or invalidation function, if an event expected for the execution of the work process on the object (3) does not occur or if an event unexpected for the execution of the work process on the object (3) does occur.

## Revendications

1. Système (1) permettant de mettre en œuvre un processus de travail sur un objet (3), dans lequel le processus de travail comprend au moins une étape de processus et dans lequel au moins un état de l'objet (3) est changé au moins temporairement par le processus de travail, dans lequel le système (1) comprend au moins les composants suivants :
- un poste de travail (11) configuré pour mettre en œuvre l'au moins une étape de processus du processus de travail,
- un dispositif de détection (5) configuré pour détecter au moins un paramètre d'état et au moins un paramètre de fonctionnement du poste de travail (11) et/ou de l'objet (3), dans lequel le poste de travail (11) est associé au dispositif de détection (5) ;
- un dispositif de commande (7) configuré pour commander le poste de travail (11) lors de la mise en œuvre d'une étape de processus du processus de travail et
- un dispositif vérificateur (9), dans lequel le dispositif de commande (7) est configuré pour demander des informations de configuration comprenant l'au moins un paramètre d'état et l'au moins un paramètre de fonctionnement à un moment antérieur au début du processus de travail, dans lequel l'au moins un paramètre d'état décrit un paramètre externe au système qui agit sur le poste de travail (11) et/ou l'objet (3) depuis l'extérieur et l'au moins un paramètre de fonctionnement décrit un paramètre interne au système, qui concerne un état actuel du poste de travail (11) et/ou de l'objet (3)
et le dispositif vérificateur (9) est configuré pour recevoir et contrôler les informations de configuration et pour créer des informations de vérification en fonction d'un résultat de contrôle des informations de configuration et pour envoyer les informations de vérification au dispositif de commande (7), et le dispositif de commande (7) est configuré pour traiter les informations de vérification, et démarrer ou ne pas démarrer le processus de travail en fonction des informations de vérification, et dans lequel le système est en outre configuré pour prendre en compte les interactions entre les paramètres d'état et les paramètres de fonctionnement lors de la commande du poste de travail (11) lors de la mise en œuvre du processus de travail.

2. Système (1) selon la revendication 1,
**caractérisé en ce que**
le dispositif de détection est configuré pour détecter une valeur d'identification du poste de travail (11) et/ou de l'objet (3) et les informations de configuration comprennent la valeur d'identification du poste de travail (11) et/ou de l'objet (3).

3. Système (1) selon une ou plusieurs des revendications précédentes,
**caractérisé en ce que**
les informations de vérification peuvent être dérivées des informations de configuration.

4. Système (1) selon une ou plusieurs des revendications précédentes,
**caractérisé en ce que**
le dispositif vérificateur est un dispositif de sécurité du poste de travail.

5. Système (1) selon une ou plusieurs des revendications précédentes,
**caractérisé en ce que**
le dispositif vérificateur est configuré pour vérifier les informations de configuration.

6. Système (1) selon une ou plusieurs des revendications précédentes,
**caractérisé en ce que**
le dispositif vérificateur est configuré pour sécuriser les informations de vérification avec des moyens cryptographiques.

7. Système (1) selon une ou plusieurs des revendications précédentes,
**caractérisé en ce que**
le dispositif vérificateur est configuré pour recevoir des informations de spécification et pour adapter une étape de processus du processus de travail en fonction des informations de spécification.

8. Système (1) selon une ou plusieurs des revendications précédentes,
**caractérisé en ce que**
le système est configuré pour remplir une fonction de chien de garde en mettant régulièrement en œuvre un procédé de vérification et/ou en le déclenchant par un événement.

9. Système (1) selon une ou plusieurs des revendications précédentes,
**caractérisé en ce que**
le système est configuré en outre pour remplir une fonction « homme mort » ou d'invalidation, qui permet d'arrêter ou de modifier de manière ciblée la mise en œuvre du processus de travail lorsqu'un événement attendu pour la mise en œuvre du processus de travail sur l'objet (3) ne se produit pas ou si un événement qui n'était pas attendu pour la mise en œuvre du processus de travail sur l'objet (3) se produit.

10. Procédé pour mettre en œuvre un processus de travail sur un objet (3), dans lequel le processus de travail est mis en œuvre par une station de travail (11) et comprenant au moins une étape de processus, et dans lequel le processus de travail modifie au moins temporairement au moins un état de l'objet (3), **dans lequel le procédé comprenant les étapes suivantes :**
a) interrogation d'informations de configuration d'un dispositif de détection (5) par un dispositif de commande (7) à un moment antérieur au début du processus de travail, dans lequel le dispositif de détection (5) est associé au poste de travail (11) et est configuré pour détecter au moins un paramètre d'état et au moins un paramètre de fonctionnement du poste de travail (11) et/ou de l'objet (3), dans lequel l'au moins un paramètre d'état décrit un paramètre externe au système qui agit sur le poste de travail (11) et/ou l'objet (3) depuis l'extérieur et l'au moins un paramètre de fonctionnement décrit un paramètre interne au système qui concerne un état actuel du poste de travail (11) et/ou de l'objet (3),
b) réception des informations de configuration comprenant l'au moins un paramètre d'état et l'au moins un paramètre de fonctionnement par un dispositif vérificateur (9),
c) contrôle des informations de configuration par le dispositif vérificateur (9),
d) création d'informations de vérification par le dispositif vérificateur (9) en fonction d'un résultat de contrôle des informations de configuration,
e) transmission des informations de vérification par le dispositif vérificateur (9) au dispositif de commande (7),
f) traitement des informations de vérification par le dispositif de commande (7) et
g) démarrage du processus de travail par le dispositif de commande (7) en fonction des informations de vérification, dans lequel le procédé en outre prend en compte lors de la commande du poste de travail (11) lors de la mise en œuvre du processus de travail les interactions entre les paramètres d'état et les paramètres de fonctionnement.

11. Procédé selon la revendication précédente
**caractérisé en ce que**
le procédé comprend une fonction de chien de garde, **en ce que** les étapes a) à g) du procédé sont mises en œuvre régulièrement en tout ou en partie et/ou **en ce que** leur mise en œuvre est déclenchée par un événement.

12. Procédé selon une des revendications précédentes 10 ou 11,
**caractérisé en ce que**
dans lequel la mise en œuvre du processus de travail est arrêtée ou modifiée de manière ciblée par l'exécution d'une fonction « homme mort » ou d'une fonction d'invalidation si un événement attendu pour la mise en œuvre du processus de travail sur l'objet (3) ne se produit pas ou si un événement qui n'était pas attendu pour la mise en œuvre du processus de travail sur l'objet (3) se produit.
